# EUROPEAN PATENT SPECIFICATION

(11) **EP 3 749 028 B1**
(45) Date of publication and mention of the grant of the patent: **28.09.2022**
(21) Application number: 18899783.7
(22) Date of filing: 11.01.2018
(51) Int. Cl.: H04W 72/04, H04L 5/00

(54) **RESOURCE ALLOCATION METHOD AND DEVICE**
RESSOURCENZUWEISUNGSVERFAHREN UND -VORRICHTUNG
PROCÉDÉ ET DISPOSITIF D'ATTRIBUTION DE RESSOURCES

(43) Date of publication of application: 09.12.2020
(73) Proprietor: GUANGDONG OPPO MOBILE TELECOMMUNICATIONS CORP., LTD., Wusha, Chang'an Dongguan, Guangdong 523860 (CN)
(72) Inventor: SHEN, Jia, Dongguan, Guangdong 523860 (CN)
(74) Representative: Manitz Finsterwald Patent- und Rechtsanwaltspartnerschaft mbB
(86) International application number: PCT/CN2018/072217
(87) International publication number: WO 2019/136656

(56) References cited:
- CN-A- 102 137 496
- CN-A- 103 945 538
- HUAWEI ET AL: "Scheduling and resource allocation for bandwidth parts", 3GPP DRAFT; R1-1712156, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20170821 - 20170825 20 August 2017 (2017-08-20), XP051314975, Retrieved from the Internet: URL:http://www.3gpp.org/ftp/Meetings_3GPP_ SYNC/RAN1/Docs/ [retrieved on 2017-08-20]
- MEDIATEK INC: "Discussion on PBCH contents", 3GPP DRAFT; R1-1713681 FURTHER DISCUSSION ON PBCH CONTENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, P.R. Czechia; 20170821 - 20170825 20 August 2017 (2017-08-20), XP051316481, Retrieved from the Internet: URL:http://www.3gpp.org/ftp/Meetings_3GPP_ SYNC/RAN1/Docs/ [retrieved on 2017-08-20]
- LG ELECTRONICS: "Remaining details on search space", 3GPP DRAFT; R1-1719918, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 18 November 2017 (2017-11-18), XP051369631, Retrieved from the Internet: URL:http://www.3gpp.org/ftp/tsg%5Fran/WG1% 5FRL1/TSGR1%5F91/Docs/ [retrieved on 2017-11-18]
- "3rd Generation Partnership Project; Technical Specification Group Radio Access Network; NR; Physical Layer Procedures for Control (Release 15", 3GPP Organizational Partners . ''3GPP TS 38.213 V2.0.0, 15 December 2017 (2017-12-15), page 40, XP051365378,
- Marshall: "5G PDCCH", Marshall Comm. Tech. Blog., 30 December 2017 (2017-12-30), pages 1-13, XP009522305, Retrieved from the Internet: URL:https://marshallcomm.cn/2017/12/30/nr- v200-l1-pdcch/

## Description

### BACKGROUND

### Technical Field

Embodiments of the present invention relate to the field of communications, and more specifically, to a resource configuration method and device.

### Related Art

In a 5G system, a physical downlink control channel (PDCCH) is transmitted in a control resource set (CORESET). Moreover, a system bandwidth in the 5G system may be divided into a plurality of bandwidth parts (BWPs), and a terminal device may use different BWPs according to an indication of a network device. Therefore, how to flexibly transmit the PDCCH in different frequency domain resources and improve transmission efficiency becomes an urgent problem to be resolved. Related technologies are known from non-patent publication document 3GPP DRAFTs R1-1712156 and R1-1713681.

### SUMMARY

Embodiments of this application provide a resource configuration method and device to flexibly transmit a PDCCH over different frequency domain resources and improve transmission efficiency. The invention is set out in the appended set of claims.

According to a first aspect, a resource configuration method is provided, including: receiving, by a terminal device, resource configuration information transmitted by a network device, where the resource configuration information is used to indicate resource mapping relationships between M bandwidth parts (BWPs) and N control resource sets, and M and N are positive integers; and monitoring, by the terminal device, based on the resource mapping relationships, a physical downlink control channel (PDCCH) transmitted by the network device over at least one control resource set corresponding to a target BWP used by the terminal device.

Therefore, when dynamic switching occurs between a plurality of BWPs used by the terminal device, the network device may transmit the PDCCH by using different control resource sets. Accordingly, the terminal device monitors the PDCCH over a control resource set corresponding to a currently used BWP, thereby enabling flexible transmission of the PDCCH over different frequency domain resources, improving transmission efficiency, and reducing power consumption of the terminal device.

The resource configuration information includes configuration information of each of the M BWPs, and configuration information of the i^{th} BWP in the M BWPs includes information about the i^{th} BWP and information about at least one control resource set corresponding to the i^{th} BWP, where i ranges from 0 to M-1.

In this embodiment, because the configuration information of each BWP carries the information about the control resource set corresponding to the BWP, it is unnecessary to separately indicate the control resource set and a resource mapping relationship between the control resource set and the BWP, thereby saving signaling overheads and helping the terminal device to quickly determine at least one control resource set corresponding to each BWP.

In a possible implementation, before the monitoring, by the terminal device, a PDCCH transmitted by the network device, the method further includes: obtaining, by the terminal device, from configuration information of the target BWP, information about the at least one control resource set corresponding to the target BWP.

In a possible implementation, information about each control resource set in the at least one control resource set corresponding to the i^{th} BWP includes information about a frequency domain resource allocated to each control resource set in the i^{th} BWP.

In a possible implementation, the information about each control resource set in the at least one control resource set corresponding to the i^{th} BWP further includes information about a time domain resource that is located in each control resource set and used to monitor the PDCCH.

In a possible implementation, the information about the time domain resource includes information about a slot or symbol that is used to monitor the PDCCH.

In a possible implementation, the resource configuration information includes configuration information of each of the M BWPs and configuration information of each of the N control resource sets, where configuration information of the i^{th} BWP in the M BWPs includes information about the i^{th} BWP, and configuration information of the j^{th} control resource set in the N control resource sets includes information about the j^{th} control resource set and an index of a BWP corresponding to the j^{th} control resource set, where i ranges from 0 to M-1, and j ranges from 0 to N-1.

In this embodiment, the configuration information of the CORESET and the configuration information of the BWP are indicated by independent fields, and an index of a BWP corresponding to each CORESET is added to the configuration information of the CORESET. Compared with Form 1, this embodiment can configure the CORESET more flexibly.

In a possible implementation, before the monitoring, by the terminal device, a PDCCH transmitted by the network device, the method further includes: selecting, by the terminal device, from the configuration information of the N control resource sets, at least one piece of configuration information that carries an index of the target BWP, and obtaining, from the at least one piece of configuration information that carries the index of the target BWP, information about the at least one control resource set corresponding to the target BWP.

In a possible implementation, the information about the j^{th} control resource set includes information about a frequency domain resource allocated to the j^{th} control resource set in the BWP corresponding to the j^{th} control resource set.

In a possible implementation, the information about the j^{th} control resource set further includes information about a time domain resource that is located in the j^{th} control resource set and used to monitor the PDCCH.

In a possible implementation, the information about the time domain resource includes information about a slot or symbol that is used to monitor the PDCCH.

According to a second aspect, a resource configuration method is provided, including: transmitting, by a network device, resource configuration information to a terminal device, where the resource configuration information is used to indicate resource mapping relationships between M bandwidth parts (BWPs) and N control resource sets, and M and N are positive integers.

Therefore, when dynamic switching occurs between a plurality of BWPs used by the terminal device, the network device may transmit the PDCCH by using different control resource sets. Accordingly, the terminal device monitors the PDCCH over a control resource set corresponding to a currently used BWP, thereby enabling flexible transmission of the PDCCH over different frequency domain resources, improving transmission efficiency, and reducing power consumption of the terminal device.

The method further includes: transmitting, by the network device, a physical downlink control channel (PDCCH) to the terminal device over at least one control resource set corresponding to a target BWP used by the terminal device.

In a possible implementation, the resource configuration information includes configuration information of each of the M BWPs, and configuration information of the i^{th} BWP in the M BWPs includes information about the i^{th} BWP and information about at least one control resource set corresponding to the i^{th} BWP, where i ranges from 0 to M-1.

In a possible implementation, information about each control resource set in the at least one control resource set corresponding to the i^{th} BWP includes information about a frequency domain resource allocated to each control resource set in the i^{th} BWP.

In a possible implementation, the information about each control resource set in the at least one control resource set corresponding to the i^{th} BWP further includes information about a time domain resource that is located in each control resource set and used to transmit the PDCCH.

In a possible implementation, the information about the time domain resource includes information about a slot or symbol that is used to transmit the PDCCH.

In a possible implementation, the resource configuration information includes configuration information of each of the M BWPs and configuration information of each of the N control resource sets, where configuration information of the i^{th} BWP in the M BWPs includes information about the i^{th} BWP, and configuration information of the j^{th} control resource set in the N control resource sets includes information about the j^{th} control resource set and an index of a BWP corresponding to the j^{th} control resource set, where i ranges from 0 to M-1, and j ranges from 0 to N-1.

In a possible implementation, the information about the j^{th} control resource set includes information about a frequency domain resource allocated to the j^{th} control resource set in the BWP corresponding to the j^{th} control resource set.

In a possible implementation, the information about the j^{th} control resource set further includes information about a time domain resource that is located in the j^{th} control resource set and used to transmit the PDCCH.

In a possible implementation, the information about the time domain resource includes information about a slot or symbol that is used to transmit the PDCCH.

According to a third aspect, a terminal device is provided. The terminal device can perform operations of the terminal device in the first aspect or any optional implementation of the first aspect. Specifically, the terminal device may include a module unit that is used to perform the operations of the terminal device in the first aspect or any possible implementation of the first aspect.

According to a fourth aspect, a network device is provided. The network device can perform operations of the network device in the second aspect or any optional implementation of the second aspect. Specifically, the network device may include a module unit that is used to perform the operations of the network device in the second aspect or any possible implementation of the second aspect.

According to a fifth aspect, a terminal device is provided. The terminal device includes: a processor, a transceiver, and a memory. The processor, the transceiver, and the memory communicate with each other through an internal connection path. The memory is configured to store an instruction, and the processor is configured to execute the instruction stored in the memory. When the processor executes the instruction stored in the memory, the terminal device is enabled to perform the method in the first aspect or in any possible implementation of the first aspect, or the terminal device is enabled to implement the terminal device according to the third aspect.

According to a sixth aspect, a network device is provided. The network device includes: a processor, a transceiver, and a memory. The processor, the transceiver, and the memory communicate with each other through an internal connection path. The memory is configured to store an instruction, and the processor is configured to execute the instruction stored in the memory. When the processor executes the instruction stored in the memory, the network device is enabled to perform the method in the second aspect or in any possible implementation of the second aspect, or the network device is enabled to implement the network device according to the fourth aspect.

According to a non claimed seventh aspect, a system chip is provided. The system chip includes an input interface, an output interface, a processor, and a memory. The processor is configured to execute an instruction stored in the memory. When the instruction is executed, the processor is enabled to implement the method according to the first aspect or any possible implementation of the first aspect.

According to a non claimed eighth aspect, a system chip is provided. The system chip includes an input interface, an output interface, a processor, and a memory. The processor is configured to execute an instruction stored in the memory. When the instruction is executed, the processor is enabled to implement the method according to the second aspect or any possible implementation of the second aspect.

According to a non claimed ninth aspect, a computer program product including an instruction is provided. When the computer program product is run on a computer, the computer is enabled to perform the method according to the first aspect or any possible implementation of the first aspect.

According to a non claimed tenth aspect, a computer program product including an instruction is provided. When the computer program product is run on a computer, the computer is enabled to perform the method according to the second aspect or any possible implementation of the second aspect.

### BRIEF DESCRIPTION OF THE DRAWINGS

FIG. 1 is a schematic diagram of a wireless communications system according to an embodiment of this application;
FIG. 2 is an interaction flowchart of a resource configuration method according to an embodiment of the present invention;
FIG. 3 is a schematic diagram of a BWP and a CORESET according to an embodiment of the present invention;
FIG. 4 is a schematic diagram of a BWP and a CORESET according to an embodiment of the present invention;
FIG. 5 is a schematic block diagram of a terminal device according to an embodiment of the present invention;
FIG. 6 is a schematic block diagram of a network device according to an embodiment of the present invention;
FIG. 7 is a schematic structural diagram of a communications device according to an embodiment of the present invention; and
FIG. 8 is a schematic structural diagram of a system chip according to an embodiment of the present invention.

### DETAILED DESCRIPTION

The technical solutions of the embodiments of this application may be applied to various communications systems, such as: a Global System for Mobile Communications ("GSM" for short), a Code Division Multiple Access ("CDMA" for short) system, a Wideband Code Division Multiple Access ("WCDMA" for short), a General Packet Radio Service ("GPRS" for short), a Long Term Evolution ("LTE" for short) system, an LTE Frequency Division Duplex ("FDD" for short) system, an LTE Time Division Duplex ("TDD" for short) system, a Universal Mobile Telecommunications System ("UMTS" for short) system, a Worldwide Interoperability for Microwave Access ("WiMAX" for short) communications system, and a future 5G communications system.

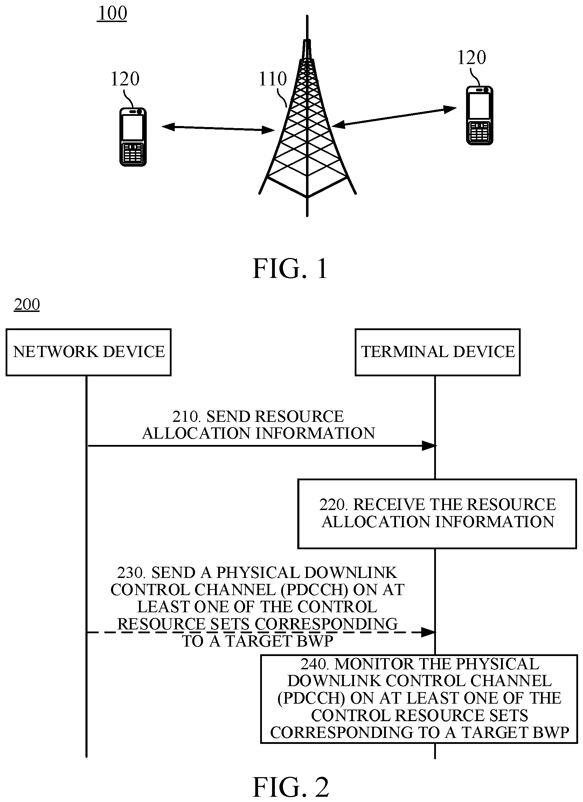

FIG. 1 shows a wireless communications system 100 to which an embodiment of this application is applied. The wireless communications system 100 may include a network device 110. The network device 100 may be a device that communicates with a terminal device. The network device 100 may provide communication coverage for a particular geographic area, and may communicate with a terminal device (such as UE) located within the coverage area. Optionally, the network device 100 may be a base transceiver station (BTS) in a GSM system or a CDMA system, or may be a NodeB (NB) in a WCDMA system, or may be an evolved Node B (eNB or eNodeB) in an LTE system, a wireless controller in a cloud radio access network (CRAN), a relay station, an access point, an in-vehicle device, a wearable device, a network-side device in a future 5G network, or a network device in a future evolved public land mobile network (PLMN) or the like.

The wireless communications system 100 further includes at least one terminal device 120 located within the coverage of the network device 110. The terminal device 120 may be mobile or fixed. Optionally, the terminal device 120 may be an access terminal, user equipment (UE), a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a cordless phone, a Session Initiation Protocol (SIP) phone, a wireless local loop (WLL) station, a personal digital assistant (PDA), a handheld device having a wireless communication function, a computing device, another processing device connected to a wireless modem, an in-vehicle device, a wearable device, a terminal device in a future 5G network, a terminal device in a future evolved PLMN, or the like.

Optionally, device to device (D2D) communication may be performed between terminal devices 120.

Optionally, the 5G system or network may also be referred to as a new radio (NR) system or network.

FIG. 1 illustrates one network device and two terminal devices. Optionally, the wireless communications system 100 may include a plurality of network devices, and another quantity of terminal devices may be included in coverage of each network device. This is not limited in this embodiment of this application.

Optionally, the wireless communications system 100 may further include other network entities such as a network controller and a mobility management entity. This is not limited in this embodiment of this application.

In the NR system, a system bandwidth may be divided into a plurality of bandwidth parts (BWPs) (or referred to as transmission bandwidth or the like). The network device may indicate to the terminal device the BWP used by the terminal device, and the terminal device may use different BWPs to transmit data. If a PDCCH is still monitored by using a fixed CORESET configured by the network device, transmission efficiency of the PDCCH is reduced, and power consumption of the terminal device is increased.

In this embodiment of this application, the CORESET for transmitting the PDCCH in different BWPs may be flexibly configured. When the terminal device uses different BWPs, the network device transmits the PDCCH by using at least one CORESET configured for the BWP. The terminal device monitors the PDCCH over the at least one CORESET configured for the BWP, thereby flexibly transmitting the PDCCH over different frequency domain resources, improving transmission efficiency, and reducing power consumption of the terminal device.

FIG. 2 is an interaction flowchart of a resource configuration method according to an embodiment of this application. A network device shown in FIG. 2 may be, for example, the network device 110 shown in FIG. 1, and a terminal device shown in FIG. 2 may be, for example, the terminal device 120 shown in FIG. 1. As shown in FIG. 2, the resource configuration method includes the following steps.

In step 210, the network device transmits resource configuration information to the terminal device.

In step 220, the terminal device receives the resource configuration information transmitted by the network device.

The resource configuration information is used to indicate resource mapping relationships between M BWPs and N control resource sets, where M and N are positive integers.

Optionally, after step 220, the method further includes step 230.

In step 230, the network device transmits a PDCCH to the terminal device over at least one control resource set corresponding to a target BWP used by the terminal device.

In step 240, the terminal device monitors, based on the resource mapping relationships, the PDCCH transmitted by the network device over at least one control resource set corresponding to the target BWP used by the terminal device.

In the resource mapping relationships, each BWP may correspond to at least one control resource set, and at least one control resource set corresponding to any two different BWPs may be identical, partially identical, or different.

Therefore, when dynamic switching occurs between a plurality of BWPs used by the terminal device, the network device may transmit the PDCCH by using different control resource sets. The terminal device monitors (or listens to, intercepts, detects, or the like) the PDCCH over a control resource set corresponding to a currently used BWP, thereby enabling flexible transmission of the PDCCH over different frequency domain resources, improving transmission efficiency, and reducing power consumption of the terminal device.

The resource mapping relationships may be determined by the network device and configured for the terminal device based on the resource configuration information, or may be pre-arranged (for example, specified in a protocol) between the network device and the terminal device.

In this embodiment of this application, the resource configuration information used to indicate the resource mapping relationships may have two forms described below.

Form 1 (claimed) The resource configuration information includes configuration information of each of the M BWPs. Configuration information of the i^{th} BWP in the M BWPs includes information about the i^{th} BWP and information about at least one control resource set corresponding to the i^{th} BWP, where i ranges from 0 to M-1 (i traverses 0 to M-1).

The configuration information of the M BWPs is carried in M independent fields respectively. The configuration information of each BWP is carried in a dedicated continuous field of the configuration information of each BWP, and the dedicated field of the configuration information of each BWP carries information about a CORESET corresponding to the BWP. Therefore, the configuration information of each BWP includes not only information about the BWP itself but also information about at least one control resource set corresponding to the BWP. The field herein may also be referred to as a sequence, a field, an information field, or the like.

For example, the configuration information of the i^{th} BWP may carry some information related to the i^{th} BWP, such as parameter information, resource location information, PDCCH information, physical downlink shared channel (PDSCH) information, and physical random access channel (RACH) information. In this embodiment, the configuration information of the i^{th} BWP includes not only such information, but also the information about the at least one control resource set corresponding to the i^{th} BWP. The information about the at least one control resource set corresponding to the i^{th} BWP is subordinate to the configuration information of the BWP, and is carried in a part of a dedicated field of the configuration information of the BWP. When receiving the resource configuration information, the terminal device may obtain, from the configuration information of each BWP, the information about the BWP itself and the information about the at least one control resource set corresponding to the BWP.

When the terminal device currently uses the target BWP for data transmission, the network device transmits the PDCCH to the terminal device over the at least one control resource set corresponding to the target BWP. Correspondingly, the terminal device detects, over the at least one control resource set corresponding to the target BWP used by the terminal device, the PDCCH transmitted by the network device.

Optionally, information about each control resource set in the at least one control resource set, which is carried in the configuration information of the i^{th} BWP, includes information about a frequency domain resource allocated to each control resource set in the i^{th} BWP.

Further, optionally, the information about each control resource set in the at least one control resource set corresponding to the i^{th} BWP may further include information about a time domain resource (also referred to as a search space) that is located in each control resource set and used to monitor the PDCCH, for example, information about a slot or symbol that is used to monitor the PDCCH.

When the resource configuration information indicates the resource mapping relationship between the BWP and the control resource set by means of Form 1, optionally, before step 240, the terminal device may obtain, from the configuration information of the target BWP, the information about the at least one control resource set corresponding to the target BWP.

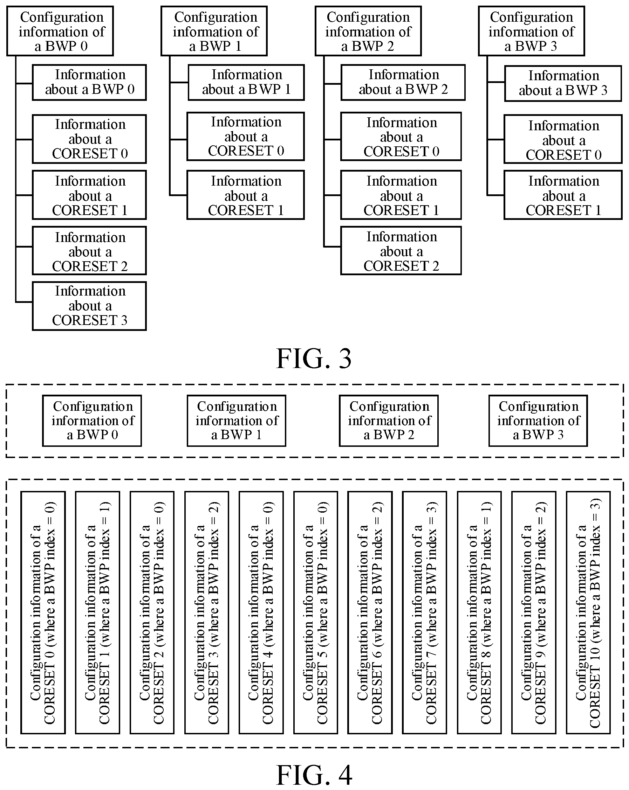

For example, as shown in the schematic diagram of the BWP and the CORESET in FIG. 3, the resource configuration information includes configuration information of M BWPs. It is assumed that M = 4. Configuration information of a BWP 0 includes information about the BWP 0 and information about at least one CORESET (a CORESET 0, a CORESET 1, a CORESET 2, and a CORESET 3) corresponding to the BWP 0, where information about each CORESET includes information about a frequency domain resource allocated to the CORESET in the BWP 0. Configuration information of a BWP 1 includes information about the BWP 1 and information about at least one CORESET (the CORESET 0 and the CORESET 1) corresponding to the BWP 1, where information about each CORESET includes information about a frequency domain resource allocated to the CORESET in the BWP 1. Configuration information of a BWP 2 includes information about the BWP 2 and information about at least one CORESET (the CORESET 0, the CORESET 1 and the CORESET 2) corresponding to the BWP 2, where information about each CORESET includes information about a frequency domain resource allocated to the CORESET in the BWP 2. Configuration information of a BWP 3 includes information about the BWP 3 and information about at least one CORESET (the CORESET 0 and the CORESET 1) corresponding to the BWP 3, where information about each CORESET includes information about a frequency domain resource allocated to the CORESET in the BWP 4.

Clearly, in FIG. 3, the configuration information of each BWP carries the information about the BWP and information about at least one CORESET corresponding to the BWP. Configuration information of different BWPs may be carried in different fields, and the fields are independent of each other without overlapping.

If the target BWP currently used by the terminal device is a BWP 0, the network device transmits the PDCCH over at least one CORESET corresponding to the BWP 0. Correspondingly, the terminal device directly obtains, from the configuration information of the BWP 0, information about the at least one CORESET corresponding to the BWP 0, and monitors, in the at least one CORESET, the PDCCH transmitted by the network device. If the target BWP currently used by the terminal device is a BWP 1, the network device transmits the PDCCH over at least one CORESET corresponding to the BWP 1. Correspondingly, the terminal device directly obtains, from the configuration information of the BWP 1, information about the at least one CORESET corresponding to the BWP 1, and monitors, in the at least one CORESET, the PDCCH transmitted by the network device. If the target BWP currently used by the terminal device is a BWP 2, the network device transmits the PDCCH over at least one CORESET corresponding to the BWP 2. Correspondingly, the terminal device directly obtains, from the configuration information of the BWP 2, information about the at least one CORESET corresponding to the BWP 2, and monitors, in the at least one CORESET, the PDCCH transmitted by the network device. If the target BWP currently used by the terminal device is a BWP 3, the network device transmits the PDCCH over at least one CORESET corresponding to the BWP 3. Correspondingly, the terminal device directly obtains, from the configuration information of the BWP 3, information about the at least one CORESET corresponding to the BWP 3, and monitors, in the at least one CORESET, the PDCCH transmitted by the network device.

In this embodiment, because the configuration information of each BWP carries the information about the control resource set corresponding to the BWP, it is unnecessary to separately indicate the control resource set and a resource mapping relationship between the control resource set and the BWP, thereby saving signaling overheads and helping the terminal device to quickly determine at least one control resource set corresponding to each BWP.

### Form 2

Optionally, the resource configuration information includes configuration information of each of the M BWPs and configuration information of each of the N control resource sets. Configuration information of the i^{th} BWP in the M BWPs includes information about the i^{th} BWP, and configuration information of the j^{th} control resource set in the N control resource sets includes information about the j^{th} control resource set, and an index of a BWP corresponding to the j^{th} control resource set, where i ranges from 0 to M-1, and j ranges from 0 to N-1.

Specifically, the resource configuration information includes configuration information of M BWPs and configuration information of N control resource sets. The configuration information of the M BWPs may be carried in M independent fields respectively. The configuration information of the N control resource sets also is carried in N independent fields respectively, and the configuration information of each control resource set is carried in a dedicated continuous field of the configuration information of each control resource set. The configuration information of each BWP in the resource configuration information includes the information about the BWP, and the configuration information of each control resource set in the resource configuration information includes the information about the control resource set and an index of a BWP to which the control resource set belongs. The field herein may also be referred to as a sequence, a field, an information field, or the like.

For example, the configuration information of the j^{th} control resource set in the N control resource sets includes information about the j^{th} control resource set, for example, information about a frequency domain resource allocated to the j^{th} control resource set in a BWP corresponding to the j^{th} control resource set, and further includes an index of the BWP corresponding to the control resource set. The BWP indicated by the index is the BWP corresponding to the control resource set. Different control resource sets may correspond to a same BWP or different BWPs. For example, BWP indexes carried in the configuration information of any two control resource sets may be identical or different.

Optionally, the information about the j^{th} control resource set includes information about a frequency domain resource allocated to the j^{th} control resource set in the BWP corresponding to the j^{th} control resource set.

Further, optionally, the information about the j^{th} control resource set further includes information about a time domain resource (also referred to as a search space) that is located in the j^{th} control resource set and used to monitor the PDCCH, for example, information about a slot or symbol that is used to monitor the PDCCH.

When the resource configuration information indicates the resource mapping relationship between the BWP and the control resource set by means of Form 2, optionally, before step 240, the terminal device may select, from the configuration information of the N control resource sets, at least one piece of configuration information that carries the index of the target BWP, and obtain, from the at least one piece of configuration information that carries the index of the target BWP, the information about the at least one control resource set corresponding to the target BWP.

For example, as shown in the schematic diagram of the BWP and the CORESET in FIG. 4, the resource configuration information includes configuration information of M BWPs and configuration information of N control resource sets. It is assumed that M = 4 and N = 11. The configuration information of the BWP 0 includes the information about the BWP 0, the configuration information of the BWP 1 includes the information about the BWP 1, the configuration information of the BWP 2 includes the information about the BWP 2, and the configuration information of the BWP 3 includes the information about the BWP 3.

Configuration information of a control resource set 0 includes an index (index 0) of a BWP to which the control resource set 0 belongs, and information about a frequency domain resource that the control resource set 0 carries in the BWP indicated by the index 0. Configuration information of a control resource set 1 includes an index (index 1) of a BWP to which the control resource set 1 belongs, and information about a frequency domain resource that the control resource set 1 carries in the BWP indicated by the index 1. Configuration information of a control resource set 2 includes an index (index 0) of a BWP to which the control resource set 2 belongs, and information about a frequency domain resource that the control resource set 2 carries in the BWP indicated by the index 0. Configuration information of a control resource set 3 includes an index (index 2) of a BWP to which the control resource set 3 belongs, and information about a frequency domain resource that the control resource set 3 carries in the BWP indicated by the index 2. Configuration information of a control resource set 4 includes an index (index 0) of a BWP to which the control resource set 4 belongs, and information about a frequency domain resource that the control resource set 4 carries in the BWP indicated by the index 0. Configuration information of a control resource set 5 includes an index (index 0) of a BWP to which the control resource set 5 belongs, and information about a frequency domain resource that the control resource set 5 carries in the BWP indicated by the index 0. Configuration information of a control resource set 6 includes an index (index 2) of a BWP to which the control resource set 6 belongs, and information about a frequency domain resource that the control resource set 6 carries in the BWP indicated by the index 2. Configuration information of a control resource set 7 includes an index (index 3) of a BWP to which the control resource set 7 belongs, and information about a frequency domain resource that the control resource set 7 carries in the BWP indicated by the index 3. Configuration information of a control resource set 8 includes an index (index 1) of a BWP to which the control resource set 8 belongs, and information about a frequency domain resource that the control resource set 8 carries in the BWP indicated by the index 1. Configuration information of a control resource set 9 includes an index (index 2) of a BWP to which the control resource set 9 belongs, and information about a frequency domain resource that the control resource set 9 carries in the BWP indicated by the index 2. Configuration information of a control resource set 10 includes an index (index 3) of a BWP to which the control resource set 10 belongs, and information about a frequency domain resource that the control resource set 13 carries in the BWP indicated by the index 3.

Clearly, in FIG. 4, the configuration information of each control resource set includes information about the control resource set and an index of a BWP corresponding to the control resource set. The index of the BWP in the configuration information of each control resource set indicates one of the M BWPs.

Assuming that an index of a target BWP currently used by the terminal device is a BWP 0, the terminal device selects, based on configuration information of the N CORESETs, the configuration information that carries an index 0 from such configuration information. As shown in FIG. 4, the configuration information that carries the index 0 includes the configuration information of a CORESET 0, a CORESET 1, a CORESET 2, and a CORESET 3. To be specific, at least one control resource set corresponding to the BWP indicated by the index 0 is the CORESET 0, the CORESET 1, the CORESET 2, and the CORESET 3. Therefore, the terminal device obtains the information about the BWP from the configuration information of the BWP indicated by the index 0, and monitors, in the CORESET 0, the CORESET 1, the CORESET 2, and the CORESET 3 that are located in the BWP, the PDCCH transmitted by the network device.

In this embodiment, the configuration information of the CORESET and the configuration information of the BWP are indicated by independent fields, and an index of a BWP corresponding to each CORESET is added to the configuration information of the CORESET. Compared with Form 1, this embodiment can configure the CORESET more flexibly.

Understandably, in this embodiment, the resource configuration information may include not only the configuration information of N control resource sets, but also configuration information of control resource sets other than the N control resource sets. For example, the resource configuration information further includes configuration information of at least one common control resource set, and the like. The configuration information of the common control resource set includes information about a frequency domain resource (also referred to as a search space) allocated to the common control resource set, or may further include information about a symbol or slot that is used to monitor the PDCCH. The configuration information of the common control resource set may include, for example, information about a frequency domain resource allocated to the common control resource set, and may include no BWP index.

In Form 1, the resource mapping relationship between the BWP and the CORESET is embodied by an affiliation between the BWP and the CORESET. Specifically, the affiliation is implemented by adding information about the CORESET corresponding to the BWP to a dedicated field of the configuration information of the BWP.

In Form 2, the configuration information of the BWP is independent of the configuration information of the CORESET. The configuration information of the BWP normally indicates the BWP, but the configuration information of the CORESET not only includes the information about the frequency domain resource allocated to the CORESET, but also indicates the index (or number) of the BWP corresponding to the CORESET.

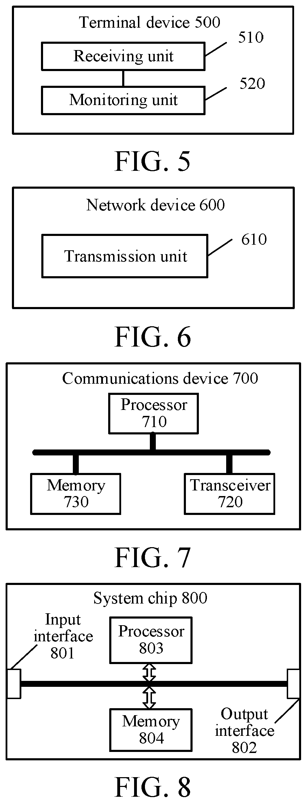

FIG. 5 is a schematic block diagram of a terminal device 500 according to an embodiment of this application. As shown in FIG. 5, the terminal device 500 includes a receiving unit 510 and a monitoring unit 520.

The receiving unit 510 is configured to receive resource configuration information transmitted by a network device, where the resource configuration information is used to indicate resource mapping relationships between M bandwidth parts (BWPs) and N control resource sets, and M and N are positive integers.

The monitoring unit 520 is configured to monitor, based on the resource mapping relationships, a physical downlink control channel (PDCCH) transmitted by the network device over at least one control resource set corresponding to a target BWP used by the terminal device.

Therefore, when dynamic switching occurs between a plurality of BWPs used by the terminal device, the network device may transmit the PDCCH by using different control resource sets. Accordingly, the terminal device monitors the PDCCH over a control resource set corresponding to a currently used BWP, thereby enabling flexible transmission of the PDCCH over different frequency domain resources, improving transmission efficiency, and reducing power consumption of the terminal device.

The resource configuration information includes configuration information of each of the M BWPs, and configuration information of the i^{th} BWP in the M BWPs includes information about the i^{th} BWP and information about at least one control resource set corresponding to the i^{th} BWP, where i ranges from 0 to M-1.

Optionally, the terminal device further includes a processing unit, configured to: obtain, from configuration information of the target BWP, information about the at least one control resource set corresponding to the target BWP.

Optionally, information about each control resource set in the at least one control resource set corresponding to the i^{th} BWP includes information about a frequency domain resource allocated to each control resource set in the i^{th} BWP.

Optionally, the information about each control resource set in the at least one control resource set corresponding to the i^{th} BWP further includes information about a time domain resource that is located in each control resource set and used to monitor the PDCCH.

Optionally, the information about the time domain resource includes information about a slot or symbol that is used to monitor the PDCCH.

Optionally, the resource configuration information includes configuration information of each of the M BWPs and configuration information of each of the N control resource sets, where configuration information of the i^{th} BWP in the M BWPs includes information about the i^{th} BWP, and configuration information of the j^{th} control resource set in the N control resource sets includes information about the j^{th} control resource set and an index of a BWP corresponding to the j^{th} control resource set, where i ranges from 0 to M-1, and j ranges from 0 to N-1.

Optionally, the terminal device further includes a processing unit, configured to: select, from the configuration information of the N control resource sets, at least one piece of configuration information that carries an index of the target BWP, and obtain, from the at least one piece of configuration information that carries the index of the target BWP, information about the at least one control resource set corresponding to the target BWP.

Optionally, the information about the j^{th} control resource set includes information about a frequency domain resource allocated to the j^{th} control resource set in the BWP corresponding to the j^{th} control resource set.

Optionally, the information about the j^{th} control resource set further includes information about a time domain resource that is located in the j^{th} control resource set and used to monitor the PDCCH.

Optionally, the information about the time domain resource includes information about a slot or symbol that is used to monitor the PDCCH.

Understandably, the terminal device 500 may perform corresponding operations that are performed by a terminal device in the method 200. For brevity, the detailed description thereof is omitted herein.

FIG. 6 is a schematic block diagram of a network device 600 according to an embodiment of this application. As shown in FIG. 6, the network device 600 includes a transmission unit 610, configured to transmit resource configuration information to a terminal device, where the resource configuration information is used to indicate resource mapping relationships between M bandwidth parts (BWPs) and N control resource sets, and M and N are positive integers.

Therefore, when dynamic switching occurs between a plurality of BWPs used by the terminal device, the network device may transmit the PDCCH by using different control resource sets. Accordingly, the terminal device monitors the PDCCH over a control resource set corresponding to a currently used BWP, thereby enabling flexible transmission of the PDCCH over different frequency domain resources, improving transmission efficiency, and reducing power consumption of the terminal device.

Optionally, the transmission unit 610 is further configured to: transmit a physical downlink control channel (PDCCH) to the terminal device over at least one control resource set corresponding to a target BWP used by the terminal device.

The resource configuration information includes configuration information of each of the M BWPs, and configuration information of the i^{th} BWP in the M BWPs includes information about the i^{th} BWP and information about at least one control resource set corresponding to the i^{th} BWP, where i ranges from 0 to M-1.

Optionally, information about each control resource set in the at least one control resource set corresponding to the i^{th} BWP includes information about a frequency domain resource allocated to each control resource set in the i^{th} BWP.

Optionally, the information about each control resource set in the at least one control resource set corresponding to the i^{th} BWP further includes information about a time domain resource that is located in each control resource set and used to transmit the PDCCH.

Optionally, the information about the time domain resource includes information about a slot or symbol that is used to transmit the PDCCH.

Optionally, the resource configuration information includes configuration information of each of the M BWPs and configuration information of each of the N control resource sets, where configuration information of the i^{th} BWP in the M BWPs includes information about the i^{th} BWP, and configuration information of the j^{th} control resource set in the N control resource sets includes information about the j^{th} control resource set and an index of a BWP corresponding to the j^{th} control resource set, where i ranges from 0 to M-1, and j ranges from 0 to N-1.

Optionally, the information about the j^{th} control resource set includes information about a frequency domain resource allocated to the j^{th} control resource set in the BWP corresponding to the j^{th} control resource set.

Optionally, the information about the j^{th} control resource set further includes information about a time domain resource that is located in the j^{th} control resource set and used to transmit the PDCCH.

Optionally, the information about the time domain resource includes information about a slot or symbol that is used to transmit the PDCCH.

Understandably, the network device 600 may perform corresponding operations that are performed by a network device in the method 200. For brevity, the detailed description thereof is omitted herein.

FIG. 7 is a schematic structural diagram of a communications device 700 according to an embodiment of this application. As shown in FIG. 7, the communications device includes a processor 710, a transceiver 720, and a memory 730. The processor 710, the transceiver 720, and the memory 730 communicate with each other through an internal connection path. The memory 730 is configured to store an instruction. The processor 710 is configured to execute the instruction stored in the memory 730 to control the transceiver 720 to receive or transmit a signal.

Optionally, the processor 710 may invoke program code stored in the memory 730 to perform corresponding operations that are performed by a terminal device in the method 200. For brevity, the detailed description thereof is omitted herein.

Optionally, the processor 710 may invoke program code stored in the memory 730 to perform corresponding operations that are performed by a network device in the method 200. For brevity, the detailed description thereof is omitted herein.

It should be understood that, the processor of this embodiment of this application may be an integrated circuit chip, and has a signal processing capability. During implementation, the steps of the foregoing method embodiment may be implemented by using a hardware integrated logic circuit in the processor or implemented by using an instruction in a software form. The foregoing processor may be a general purpose processor, a digital signal processor (DSP), an application-specific integrated circuit (ASIC), a field programmable gate array (FPGA), or another programmable logical device, discrete gate or transistor logical device, or discrete hardware component. The processor may implement or perform methods, steps and logical block diagrams disclosed in the embodiments of this application. The general purpose processor may be a microprocessor or the processor may be any conventional processor and the like. Steps of the methods disclosed with reference to the embodiments of this application may be directly executed and completed by means of a hardware decoding processor, or may be executed and completed by using a combination of hardware and software modules in the decoding processor. The software module may be located in a mature storage medium in the field, such as a random access memory, a flash memory, a read-only memory, a programmable read-only memory, an electrically-erasable programmable memory, or a register. The storage medium is located in the memory, and the processor reads information in the memory and completes the steps in the foregoing methods in combination with hardware of the processor.

It can be understood that, the memory in the embodiments of this application may be a volatile memory or a non-volatile memory, or may include both a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM) or a flash memory. The volatile memory may be a random access memory (RAM), and is used as an external cache. Through exemplary but not limitative description, many forms of RAMs may be used, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM) and a direct rambus random access memory (DR RAM). It should be noted that, the memory for the system and the method described in this application aims to include but not limited to these memories and any other suitable types of memories.

FIG. 8 is a schematic structural diagram of a system chip according to an embodiment of this application. The system chip 800 in FIG. 8 includes an input interface 801, an output interface 802, at least one processor 803, and a memory 804. The input interface 801, the output interface 802, the processor 803, and the memory 804 are interconnected through an internal connection path. The processor 803 is configured to execute code in the memory 804.

Optionally, when the code is executed, the processor 803 may implement corresponding operations that are performed by a terminal device in the method 200. For brevity, the detailed description thereof is omitted herein.

Optionally, when the code is executed, the processor 803 may implement corresponding operations that are performed by a network device in the method 200. For brevity, the detailed description thereof is omitted herein.

It should be understood that in this embodiment of the present disclosure, "B corresponding to A" indicates that B is associated with A, and B may be determined based on A. However, it should further be understood that determining B according to A does not mean that B is determined according to A only; that is, B may alternatively be determined according to A and/or other information.

A person of ordinary skill in the art may be aware that, in combination with the examples described in the embodiments disclosed in this specification, units and algorithm steps may be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely schematic. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of this application may be integrated into one monitoring unit, or each of the units may exist alone physically, or two or more units are integrated into one unit.

When the functions are implemented in a form of a software functional module and sold or used as an independent product, the functions may be stored in a computer-readable storage medium. Based on such an understanding, the technical solutions of this application essentially, or the part contributing to the prior art, or part of the technical solutions may be implemented in the form of a software product. The computer software product is stored in a storage medium, and includes several instructions for instructing a computer device (which may be a personal computer, a server, a network device, and the like) to perform all or a part of the steps of the method described in the embodiments of this application. The foregoing storage medium includes: any medium that can store program codes, such as a USB flash disk, a removable hard disk, a read-only memory (ROM), a random access memory (RAM), a magnetic disk, or an optical disk.

## Claims

1. A resource configuration method, wherein the method comprises:
obtaining, by a terminal device, resource configuration information transmitted by a network device, wherein the resource configuration information indicates resource mapping relationships between M bandwidth parts, BWPs, and N control resource sets, and M and N are positive integers; and
monitoring, by the terminal device, based on the resource mapping relationships, a physical downlink control channel, PDCCH, over at least one control resource set corresponding to a target BWP used by the terminal device,
the method **characterised in that** the resource configuration information comprises configuration information of each of the M BWPs, and configuration information of the i^{th} BWP in the M BWPs comprises information about the i^{th} BWP and information about at least one control resource set corresponding to the i^{th} BWP, wherein i ranges from 0 to M-1; configuration information of the M BWPs is carried in M independent fields respectively, the configuration information of each BWP is carried in a dedicated continuous field of the configuration information of each BWP, and the dedicated field of the configuration information of each BWP carries information about a CORESET corresponding to the BWP.

2. The method according to claim 1, further comprising:
obtaining, by the terminal device, from configuration information of the target BWP, information about the at least one control resource set corresponding to the target BWP.

3. The method according to claim 1 or 2, wherein information about each control resource set in the at least one control resource set corresponding to the i^{th} BWP comprises information about a frequency domain resource allocated to each control resource set in the i^{th} BWP.

4. The method according to claim 1, wherein the resource configuration information further comprises configuration information of each of the N control resource sets, wherein
configuration information of the j^{th} control resource set in the N control resource sets comprises information about the j^{th} control resource set and an index of a BWP corresponding to the j^{th} control resource set, wherein i ranges from 0 to M-1, and j ranges from 0 to N-1.

5. The method according to claim 4, wherein the information about each control resource set in the at least one control resource set corresponding to the i^{th} BWP further comprises information about a time domain resource that is located in each control resource set and used to monitor the PDCCH.

6. The method according to claim 5, wherein the information about the time domain resource comprises information about a symbol that is used to monitor the PDCCH.

7. A terminal device, wherein the terminal device comprises:
a receiving unit, configured to obtain resource configuration information transmitted by a network device, wherein the resource configuration information indicates resource mapping relationships between M bandwidth parts, BWPs, and N control resource sets, and M and N are positive integers; and
a monitoring unit, configured to monitor, based on the resource mapping relationships, a physical downlink control channel, PDCCH, over at least one control resource set corresponding to a target BWP used by the terminal device,
**characterised in that** the resource configuration information comprises configuration information of each of the M BWPs, and configuration information of the i^{th} BWP in the M BWPs comprises information about the i^{th} BWP and information about at least one control resource set corresponding to the i^{th} BWP, wherein i ranges from 0 to M-1; configuration information of the M BWPs is carried in M independent fields respectively, the configuration information of each BWP is carried in a dedicated continuous field of the configuration information of each BWP, and the dedicated field of the configuration information of each BWP carries information about a CORESET corresponding to the BWP.

8. The terminal device according to claim 7, wherein the terminal device further comprises a processing unit, configured to:
obtain, from configuration information of the target BWP, information about the at least one control resource set corresponding to the target BWP.

9. The terminal device according to claim 7 or 8, wherein information about each control resource set in the at least one control resource set corresponding to the i^{th} BWP comprises information about a frequency domain resource allocated to each control resource set in the i^{th} BWP.

10. The terminal device according to claim 7, wherein the resource configuration information further comprises configuration information of each of the N control resource sets, wherein
configuration information of the j^{th} control resource set in the N control resource sets comprises information about the j^{th} control resource set and an index of a BWP corresponding to the j^{th} control resource set, wherein i ranges from 0 to M-1, and j ranges from 0 to N-1.

11. The terminal device according to claim 7, wherein the information about each control resource set in the at least one control resource set corresponding to the i^{th} BWP further comprises information about a time domain resource that is located in each control resource set and used to monitor the PDCCH.

12. The terminal device according to claim 11, wherein the information about the time domain resource comprises information about a symbol that is used to monitor the PDCCH.

13. A network device, wherein the network device comprises:
a transmission unit, configured to transmit resource configuration information to a terminal device, wherein the resource configuration information indicates resource mapping relationships between M bandwidth parts, BWPs, and N control resource sets, and M and N are positive integers,
**characterised in that** the resource configuration information comprises configuration information of each of the M BWPs, and configuration information of the i^{th} BWP in the M BWPs comprises information about the i^{th} BWP and information about at least one control resource set corresponding to the i^{th} BWP, wherein i ranges from 0 to M-1; configuration information of the M BWPs is carried in M independent fields respectively, the configuration information of each BWP is carried in a dedicated continuous field of the configuration information of each BWP, and the dedicated field of the configuration information of each BWP carries information about a CORESET corresponding to the BWP.

14. The network device according to claim 13, wherein the transmission unit is further configured to:
transmit a physical downlink control channel, PDCCH, to the terminal device over at least one control resource set corresponding to a target BWP used by the terminal device.

15. The network device according to claim 13, wherein information about each control resource set in the at least one control resource set corresponding to the i^{th} BWP further comprises information about a frequency domain resource allocated to each control resource set in the i^{th} BWP.

## Patentansprüche

1. Ressourcenkonfigurationsverfahren, wobei das Verfahren umfasst:
Erhalten von Ressourcenkonfigurationsinformationen, die durch eine Netzwerkvorrichtung gesendet werden, durch eine Endgerätevorrichtung, wobei die Ressourcenkonfigurationsinformationen Ressourcenabbildungsbeziehungen zwischen M Bandbreitenteilen, BWP, und N Steuerressourcensätzen angeben, wobei M und N positive ganze Zahlen sind; und
Überwachen eines physischen Abwärtsstreckensteuerkanals, PDCCH, durch die Endgerätevorrichtung basierend auf den Ressourcenabbildungsbeziehungen über mindestens einen Steuerressourcensatz, der einem durch die Endgerätevorrichtung verwendeten Ziel-BWP entspricht,
wobei das Verfahren **dadurch gekennzeichnet ist, dass**:
die Ressourcenkonfigurationsinformationen Konfigurationsinformationen jedes der M BWP umfassen und die Konfigurationsinformationen des i-ten BWP in den M BWP Informationen über den i-ten BWP und Informationen über mindestens einen dem i-ten BWP entsprechenden Steuerressourcensatz umfassen, wobei i im Bereich von 0 bis M-1 liegt; die Konfigurationsinformationen der M BWP jeweils in M unabhängigen Feldern gesendet werden, die Konfigurationsinformationen jedes BWP in einem dedizierten kontinuierlichen Feld der Konfigurationsinformationen jedes BWP gesendet werden und das dedizierte Feld der Konfigurationsinformationen jedes BWP Informationen über einen dem BWP entsprechenden CORESET trägt.

2. Verfahren gemäß Anspruch 1, ferner umfassend:
Erhalten von Informationen über den mindestens einen Steuerressourcensatz, der dem Ziel-BWP entspricht, durch die Endgerätevorrichtung aus Konfigurationsinformationen des Ziel-BWP.

3. Verfahren gemäß Anspruch 1 oder 2, wobei die Informationen über jeden Steuerressourcensatz in dem mindestens einen Steuerressourcensatz, der dem i-ten BWP entspricht, Informationen über eine Frequenzbereichsressource umfassen, die jedem Steuerressourcensatz in dem i-ten BWP zugewiesen ist.

4. Verfahren gemäß Anspruch 1, wobei die Ressourcenkonfigurationsinformationen ferner Konfigurationsinformationen jedes der N Steuerressourcensätze umfassen, wobei die Konfigurationsinformationen des j-ten Steuerressourcensatzes in den N Steuerressourcensätzen Informationen über den j-ten Steuerressourcensatz und einen Index eines BWP umfassen, der dem j-ten Steuerressourcensatz entspricht, wobei i im Bereich von 0 bis M-1 und j im Bereich von 0 bis N-1 liegt.

5. Verfahren gemäß Anspruch 4, wobei die Informationen über jeden Steuerressourcensatz in dem mindestens einen Steuerressourcensatz, der dem i-ten BWP entspricht, ferner Informationen über eine Zeitbereichsressource umfassen, die sich in jedem Steuerressourcensatz befindet und zum Überwachen des PDCCH verwendet wird.

6. Verfahren gemäß Anspruch 5, wobei die Informationen über die Zeitbereichsressource Informationen über ein Symbol umfassen, das zum Überwachen des PDCCH verwendet wird.

7. Endgerätevorrichtung, wobei die Endgerätevorrichtung umfasst:
eine Empfangseinheit, die dazu konfiguriert ist, durch eine Netzwerkvorrichtung gesendete Ressourcenkonfigurationsinformationen zu erhalten, wobei die Ressourcenkonfigurationsinformationen Ressourcenabbildungsbeziehungen zwischen M Bandbreitenteilen, BWP, und N Steuerressourcensätzen angeben und M und N positive ganze Zahlen sind; und
eine Überwachungseinheit, die dazu konfiguriert ist, basierend auf den Ressourcenabbildungsbeziehungen einen physischen Abwärtsstreckensteuerkanal, PDCCH, über mindestens einen Steuerressourcensatz zu überwachen, der einem durch die Endgerätevorrichtung verwendeten Ziel-BWP entspricht,
**dadurch gekennzeichnet, dass**
die Ressourcenkonfigurationsinformationen Konfigurationsinformationen jedes der M BWP umfassen und die Konfigurationsinformationen des i-ten BWP in den M BWP Informationen über den i-ten BWP und Informationen über mindestens einen dem i-ten BWP entsprechenden Steuerressourcensatz umfassen, wobei i im Bereich von 0 bis M-1 liegt; die Konfigurationsinformationen der M BWP jeweils in M unabhängigen Feldern gesendet werden, die Konfigurationsinformationen jedes BWP in einem dedizierten kontinuierlichen Feld der Konfigurationsinformationen jedes BWP gesendet werden und das dedizierte Feld der Konfigurationsinformationen jedes BWP Informationen über einen dem BWP entsprechenden CORESET trägt.

8. Endgerätevorrichtung gemäß Anspruch 7, wobei die Endgerätevorrichtung ferner eine Verarbeitungseinheit umfasst, die dazu konfiguriert ist:
aus den Konfigurationsinformationen des Ziel-BWP Informationen über den mindestens einen Steuerressourcensatz zu erhalten, der dem Ziel-BWP entspricht.

9. Endgerätevorrichtung gemäß Anspruch 7 oder 8, wobei die Informationen über jeden Steuerressourcensatz in dem mindestens einen Steuerressourcensatz, der dem i-ten BWP entspricht, Informationen über eine Frequenzbereichsressource umfassen, die jedem Steuerressourcensatz in dem i-ten BWP zugewiesen ist.

10. Endgerätevorrichtung gemäß Anspruch 7, wobei die Ressourcenkonfigurationsinformationen ferner Konfigurationsinformationen für jeden der N Steuerressourcensätze umfassen, wobei
die Konfigurationsinformationen des j-ten Steuerressourcensatzes in den N Steuerressourcensätzen Informationen über den j-ten Steuerressourcensatz und einen Index eines BWP umfassen, der dem j-ten Steuerressourcensatz entspricht, wobei i im Bereich von 0 bis M-1 und j im Bereich von 0 bis N-1 liegt.

11. Endgerätevorrichtung gemäß Anspruch 7, wobei die Informationen über jeden Steuerressourcensatz in dem mindestens einen Steuerressourcensatz, der dem i-ten BWP entspricht, ferner Informationen über eine Zeitbereichsressource umfassen, die sich in jedem Steuerressourcensatz befindet und zum Überwachen des PDCCH verwendet wird.

12. Endgerätevorrichtung gemäß Anspruch 11, wobei die Informationen über die Zeitbereichsressource Informationen über ein Symbol umfassen, das zum Überwachen des PDCCH verwendet wird.

13. Netzwerkvorrichtung, wobei die Netzwerkvorrichtung umfasst:
eine Sendeeinheit, die dazu konfiguriert ist, Ressourcenkonfigurationsinformationen an eine Endgerätevorrichtung zu senden, wobei die Ressourcenkonfigurationsinformationen Ressourcenabbildungsbeziehungen zwischen M Bandbreitenteilen, BWP, und N Steuerressourcensätzen anzeigen und M und N positive ganze Zahlen sind,
**dadurch gekennzeichnet, dass**
die Ressourcenkonfigurationsinformationen Konfigurationsinformationen jedes der M BWP umfassen und die Konfigurationsinformationen des i-ten BWP in den M BWP Informationen über den i-ten BWP und Informationen über mindestens einen dem i-ten BWP entsprechenden Steuerressourcensatz umfassen, wobei i im Bereich von 0 bis M-1 liegt; die Konfigurationsinformationen der M BWP jeweils in M unabhängigen Feldern gesendet werden, die Konfigurationsinformationen jedes BWP in einem dedizierten kontinuierlichen Feld der Konfigurationsinformationen jedes BWP gesendet werden und das dedizierte Feld der Konfigurationsinformationen jedes BWP Informationen über einen dem BWP entsprechenden CORESET trägt.

14. Netzwerkvorrichtung gemäß Anspruch 13, wobei die Sendeeinheit ferner dazu konfiguriert ist:
einen physischen Abwärtsstreckensteuerkanal, PDCCH, über mindestens einen Steuerressourcensatz, der einem durch die Endgerätevorrichtung verwendeten Ziel-BWP entspricht, an die Endgerätevorrichtung zu senden.

15. Netzwerkvorrichtung gemäß Anspruch 13, wobei die Informationen über jeden Steuerressourcensatz in dem mindestens einen Steuerressourcensatz, der dem i-ten BWP entspricht, ferner Informationen über eine Frequenzbereichsressource umfassen, die jedem Steuerressourcensatz in dem i-ten BWP zugewiesen ist.

## Revendications

1. Procédé de configuration de ressources, le procédé comprenant :
l'obtention, par un dispositif terminal, d'informations de configuration de ressources transmises par un dispositif de réseau, les informations de configuration de ressources indiquant des relations de mappage de ressources entre M parties de bande passante (« bandwidth parts »), BWP, et N ensembles de ressources de commande, et M et N étant des nombres entiers positifs ; et
la surveillance, par le dispositif terminal, sur la base des relations de mappage de ressources, d'un canal de commande physique de liaison descendante (« physical downlink control channel »), PDCCH, par l'intermédiaire d'au moins un ensemble de ressources de commande correspondant à une BWP cible utilisée par le dispositif terminal,
le procédé étant **caractérisé en ce que**
les informations de configuration de ressources comprennent des informations de configuration de chacune des M BWP, et des informations de configuration de la i^{ième} BWP dans les M BWP comprennent des informations concernant la i^{ième} BWP et des informations concernant au moins un ensemble de ressources de commande correspondant à la i^{ième} BWP, où i s'échelonne de 0 à M-1; des informations de configuration des M BWP sont portées dans M champs indépendants respectivement, les informations de configuration de chaque BWP sont portées dans un champ continu dédié des informations de configuration de chaque BWP, et le champ dédié des informations de configuration de chaque BWP porte des informations concernant un CORESET correspondant à la BWP.

2. Procédé selon la revendication 1, comprenant en outre :
l'obtention, par le dispositif terminal, à partir des informations de configuration de la BWP cible, d'informations concernant l'au moins un ensemble de ressources de commande correspondant à la BWP cible.

3. Procédé selon la revendication 1 ou 2, dans lequel des informations concernant chaque ensemble de ressources de commande dans l'au moins un ensemble de ressources de commande correspondant à la i^{ième} BWP comprennent des informations concernant une ressource de domaine fréquenciel attribuée à chaque ensemble de ressources de commande dans la i^{ième} BWP.

4. Procédé selon la revendication 1, dans lequel les informations de configuration de ressources comprennent en outre des informations de configuration de chacun des N ensembles de ressources de commande, dans lequel des informations de configuration du j^{ième} ensemble de ressources de commande dans les N ensembles de ressources de commande comprennent des informations concernant le j^{ième} ensemble de ressources de commande et un indice d'une BWP correspondant au j^{ième} ensemble de ressources de commande, où i s'échelonne de 0 à M-1, et j s'échelonne de 0 à N-1.

5. Procédé selon la revendication 4, dans lequel les informations concernant chaque ensemble de ressources de commande dans l'au moins un ensemble de ressources de commande correspondant à la i^{ième} BWP comprennent en outre des informations concernant une ressource de domaine temporel qui est localisée dans chaque ensemble de ressources de commande et utilisée pour surveiller le PDCCH.

6. Procédé selon la revendication 5, dans lequel les informations concernant la ressource de domaine temporel comprennent des informations concernant un symbole qui est utilisé pour surveiller le PDCCH.

7. Dispositif terminal, le dispositif terminal comprenant :
une unité de réception, configurée pour obtenir des informations de configuration de ressources transmises par un dispositif de réseau, les informations de configuration de ressources indiquant des relations de mappage de ressources entre M parties de bande passante, BWP, et N ensembles de ressources de commande, et M et N étant des nombres entiers positifs ; et
une unité de surveillance, configurée pour surveiller, sur la base des relations de mappage de ressources, un canal de commande physique de liaison descendante, PDCCH, par l'intermédiaire d'au moins un ensemble de ressources de commande correspondant à une BWP cible utilisée par le dispositif terminal,
**caractérisé en ce que**
les informations de configuration de ressources comprennent des informations de configuration de chacune des M BWP, et des informations de configuration de la i^{ième} BWP dans les M BWP comprennent des informations concernant la i^{ième} BWP et des informations concernant au moins un ensemble de ressources de commande correspondant à la i^{ième} BWP, où i s'échelonne de 0 à M-1; des informations de configuration des M BWP sont portées dans M champs indépendants respectivement, les informations de configuration de chaque BWP sont portées dans un champ continu dédié des informations de configuration de chaque BWP, et le champ dédié des informations de configuration de chaque BWP porte des informations concernant un CORESET correspondant à la BWP.

8. Dispositif terminal selon la revendication 7, le dispositif terminal comprenant en outre une unité de traitement, configurée pour :
obtenir, à partir des informations de configuration de la BWP cible, des informations concernant l'au moins un ensemble de ressources de commande correspondant à la BWP cible.

9. Dispositif terminal selon la revendication 7 ou 8, dans lequel des informations concernant chaque ensemble de ressources de commande dans l'au moins un ensemble de ressources de commande correspondant à la i^{ième} BWP comprennent des informations concernant une ressource de domaine fréquenciel attribuée à chaque ensemble de ressources de commande dans la i^{ième} BWP.

10. Dispositif terminal selon la revendication 7, dans lequel les informations de configuration de ressources comprennent en outre des informations de configuration de chacun des N ensembles de ressources de commande, dans lequel
des informations de configuration du j^{ième} ensemble de ressources de commande dans les N ensembles de ressources de commande comprennent des informations concernant le j^{ième} ensemble de ressources de commande et un indice d'une BWP correspondant au j^{ième} ensemble de ressources de commande, où i s'échelonne de 0 à M-1, et j s'échelonne de 0 à N-1.

11. Dispositif terminal selon la revendication 7, dans lequel les informations concernant chaque ensemble de ressources de commande dans l'au moins un ensemble de ressources de commande correspondant à la i^{ième} BWP comprennent en outre des informations concernant une ressource de domaine temporel qui est localisée dans chaque ensemble de ressources de commande et utilisée pour surveiller le PDCCH.

12. Dispositif terminal selon la revendication 11, dans lequel les informations concernant la ressource de domaine temporel comprennent des informations concernant un symbole qui est utilisé pour surveiller le PDCCH.

13. Dispositif de réseau, le dispositif de réseau comprenant :
une unité de transmission, configurée pour transmettre des informations de configuration de ressources à un dispositif terminal, les informations de configuration de ressources indiquant des relations de mappage de ressources entre M parties de bande passante, BWP, et N ensembles de ressources de commande, et M et N étant des nombres entiers positifs,
**caractérisé en ce que**
les informations de configuration de ressources comprennent des informations de configuration de chacune des M BWP, et des informations de configuration de la i^{ième} BWP dans les M BWP comprennent des informations concernant la i^{ième} BWP et des informations concernant au moins un ensemble de ressources de commande correspondant à la i^{ième} BWP, où i s'échelonne de 0 à M-1; des informations de configuration des M BWP sont portées dans M champs indépendants respectivement, les informations de configuration de chaque BWP sont portées dans un champ continu dédié des informations de configuration de chaque BWP, et le champ dédié des informations de configuration de chaque BWP porte des informations concernant un CORESET correspondant à la BWP.

14. Dispositif de réseau selon la revendication 13, dans lequel l'unité de transmission est configurée en outre pour :
transmettre un canal de commande physique en liaison descendante, PDCCH, au dispositif terminal par l'intermédiaire d'au moins un ensemble de ressources de commande correspondant à une BWP cible utilisée par le dispositif terminal.

15. Dispositif de réseau selon la revendication 13, dans lequel des informations concernant chaque ensemble de ressources de commande dans l'au moins un ensemble de ressources de commande correspondant à la i^{ième} BWP comprennent en outre des informations concernant une ressource de domaine fréquenciel attribuée à chaque ensemble de ressources de commande dans la i^{ième} BWP.
